# EUROPÄISCHE PATENTSCHRIFT

(11) **EP 2 113 068 B1**
(45) Veröffentlichungstag und Bekanntmachung des Hinweises auf die Patenterteilung: **09.02.2011**
(21) Anmeldenummer: 07857593.3
(22) Anmeldetag: 14.12.2007
(51) Int. Cl.: G01F 1/58, F16B 21/16

(54) **VORRICHTUNG ZUM MESSEN DES VOLUMEN- ODER MASSESTROMS EINES MEDIUMS IN EINER ROHRLEITUNG**
DEVICE FOR MEASURING THE VOLUMETRIC OR MASS FLOW OF A MEDIUM IN A PIPELINE
DISPOSITIF POUR MESURER LE DÉBIT VOLUMÉTRIQUE OU MASSIQUE D'UN MILIEU DANS UNE CANALISATION

(30) Priorität: 19.12.2006 DE 102006060445
(43) Veröffentlichungstag der Anmeldung: 04.11.2009
(73) Patentinhaber: Endress+Hauser Flowtec AG, 4153 Reinach (CH)
(72) Erfinder: LANG, Arno, 79379 Müllheim (DE); ROTH, Jörg, 79540 Lörrach (DE)
(74) Vertreter: Andres, Angelika Maria
(86) Internationale Anmeldenummer: PCT/EP2007/063956
(87) Internationale Veröffentlichungsnummer: WO 2008/074740

(56) Entgegenhaltungen:
- EP-A- 0 892 252
- FR-A- 2 833 661
- GB-A- 2 298 716
- US-A- 4 642 859
- US-A- 5 773 723
- US-B1- 6 305 870

## Beschreibung

Die Erfindung betrifft eine Vorrichtung zum Messen des Volumen- oder Massestroms eines Mediums in einer Rohrleitung, mit einem Messrohr, das von dem Medium in Richtung der Längsachse des Messrohres durchströmt wird, mit einem Magnetsystem, das derart ausgestaltet ist, dass es ein das Messrohr durchsetzendes, im wesentlichen quer zur Längsachse des Messrohrs verlaufendes Magnetfeld erzeugt, mit zumindest zwei mit dem Medium koppelnden Messelektroden, die in einem im wesentlichen senkrecht zum Magnetfeld liegenden Bereich in einer Bohrung in der Wandung des Messrohres angeordnet sind, wobei die Messelektrode einen länglichen Elektrodenschaft mit einem ersten mit dem Medium koppelnden aufgeweiteten Endbereich aufweist, der so dimensioniert ist, dass sein Durchmesser größer ist als der Durchmesser der Bohrung in der Wandung des Messrohrs, in der die Messelektrode plaziert ist, und mit einer Regel-/Auswerteeinheit , die anhand der in die zumindest eine Messelektrode induzierten Messspannung Information über den Volumen- oder Massestrom des Mediums in dem Messrohr liefert.

Magnetisch-induktive Durchflussmessgeräte nutzen für die volumetrische Strömungsmessung das Prinzip der elektrodynamischen Induktion aus: Senk-recht zu einem Magnetfeld bewegte Ladungsträger des Mediums induzieren in gleichfalls im wesentlichen senkrecht zur Durchflussrichtung des Mediums und senkrecht zur Richtung des Magnetfeldes angeordnete Messelektroden eine Messspannung. Die in die Messelektroden induzierte Messspannung ist proportional zu der über den Querschnitt des Messrohres gemittelten Strömungsgeschwindigkeit des Mediums; sie ist also proportional zum Volumenstrom. Ist die Dichte des Mediums bekannt, lässt sich der Massestrom in der Rohrleitung bzw. in dem Messrohr bestimmen. Die Messspannung wird üblicherweise über das Messelektrodenpaar abgegriffen, das in dem Bereich des Messrohres angeordnet ist, wo die maximale Magnetfeldstärke und folglich die maximale Messspannung zu erwarten ist. Die Messelektroden sind üblicherweise galvanisch mit dem Medium gekoppelt; es sind jedoch auch magnetisch-induktive Durchflussmessgeräte mit kapazitiv koppelnden Messelektroden bekannt geworden. Nachfolgend wird ausschließlich auf galvanisch mit dem Medium koppelnde Messelektroden Bezug genommen.

Das Messrohr kann entweder aus einem elektrisch leitfähigen Material, z.B. Edelstahl, gefertigt sein, oder es besteht aus einem elektrisch isolierenden Material. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht üblicherweise aus einem thermoplastischen, einem duro-plastischen oder einem elastomeren Kunststoff. Es sind jedoch auch magnetisch-induktive Durchflussmessgeräte mit einer keramischen Auskleidung bekannt geworden.

Die Messelektroden sind neben dem Magnetsystem die zentralen Komponenten eines magnetisch-induktiven Durchflussmessgeräts. Bei der Ausgestaltung und Anordnung der Messelektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Messelektroden durch eine empfindliche und gleichzeitig störungsarme Messsignalerfassung auszeichnen. Grundsätzlich lassen sich bei zwei Typen von Elektrodenkonstruktionen unterscheiden:
- Messelektroden, die von außen in das Messrohr eingesetzt und montiert werden und
- Messelektroden, die von innen in das Messrohr eingesetzt und montiert werden.

Bei dem zuerst genannten Typ ist die Ausgestaltung des Elektrodenkopfes durch den Durchmesser der Bohrung eingegrenzt: eine Montage von außen ist möglich, wenn der Durchmesser des Elektrodenkopfes kleiner oder gleich ist dem Durchmesser der Bohrung in der Wandung des Messrohrs, in der die Messelektrode plaziert ist. Bevorzugt handelt es sich bei den von außen montierbaren Messelektroden um Stiftelektroden, wie sie beispielsweise in der EP 0 892 252 A1 beschrieben sind. Bevorzugt werden Stiftelektroden bei magnetisch-induktiven Durchflussmessgeräten mit kleinen Nennweiten eingesetzt, also in Bereichen, wo die Montage von innen aufgrund der kleinen Abmessungen nur schwierig oder überhaupt nicht zu bewerkstelligen ist. Darüber hinaus ist es aber auch durchaus sinnvoll, Stiftelektroden bei Durchflussmessgeräten mit größeren Nennweiten zu montieren, da sich Stiftelektroden mit einer Tannenbaumkonstruktion im Bereich des Elektrodenschafts, wie in der EP 0 892 252 A1 offenbart, ohne großen Aufwand in einem Messrohr aus Kunststoff oder in einem Messrohr mit Kunststoff-Liner montieren lassen. Bei dem zweiten Typ von Messelektroden entfällt die Einschränkung im Hinblick auf die Dimensionierung des Elektrodenkopfs; hier muss lediglich der Elektrodenschaft so ausgestaltet sein, dass er in der Bohrung montiert werden kann. Der Elektrodenkopf kann hier je nach Applikation sowohl in Größe als auch in Form in weiten Grenzen variieren. Bekannte von innen montierbare Messelektroden haben üblicherweise z.B. pilzkopfförmige bzw. linsenförmige oder tellerförmige Elektrodenköpfe. Beide Typen von Messelektroden werden übrigens von der Anmelderin in ihrem Durchflussmessgeräten eingesetzt.

Aus der GB 2 298 716 A sind zwei unterschiedlich Varianten von Messelektroden-Konstruktionen bekannt geworden. Bei der ersten Ausgestaltung wird die pilzförmige Messelektrode in einer mit einem elektrisch isolierenden Material ausgekleideten Bohrung des Messrohrs über ein Federpaket und eine Schraubverbindung befestigt. Um zu verhindern, dass Medium in die Bohrung eindringt, ist an der Innenfläche des pilzförmigen Elektrodenkopfes eine umfängliche Kante vorgesehen, die sich im montierten Zustand in das Linermaterial eindrückt. Bei der zweiten Variante wird die Dichtwirkung durch eine scharfkantige, kegelstumpfförmige Verdickung im Bereich des Elektrodenschafts erreicht. Auch bei dieser Ausgestaltung erfolgt die Befestigung der Messelektrode in der Bohrung über eine Tellerfeder bzw. ein Federpaket und eine Schraubverbindung.

Aus der US 5 773 723 ist eine Vorrichtung gemäß dem Oberbegriff des unabhängigen Anspruchs bekannt geworden.

Die FR 2 833 661 zeigt eine Klemmvorrichtung mit einem Klemmkeil zum Feststellen eines Stifts mit einer Ausnehmung.

Der Erfindung liegt die Aufgabe zugrunde, ein kostengünstiges magnetisch-induktives Durchflussmessgerät mit einfach zu montierenden Messelektroden vorzuschlagen.

Die Aufgabe wird dadurch gelöst, dass im dem ersten Endbereich entgegengesetzten zweiten Endbereich des Elektrodenschafts der Messelektrode eine Ausnehmung oder eine Erhebung vorgesehen ist, und dass ein Klemmkeil vorgesehen ist, der im Eingriff mit der Ausnehmung der der Erhebung steht und die Messelektrode in der Bohrung des Messrohrs gegen das Messrohr verkeilt. Anstelle des Klemmkeils kann auch eine aufsteckbare Federkonstruktion vorgesehen sein. Des Weiteren wird ein Verbindungsleitung zur elektrischen Verbindung der Messelektrode(4, 5) mit der Regel-/Auswerteeinheit (8) beim Positionieren des Klemmkeils (22) in der Ausnehmung (21) durch Einklemmen mit der Messelektrode (4, 5) kontaktiert. Gemäß einer bevorzugten Ausgestaltung der erfindungsgemäßen Vorrichtung ist der Anpressdruck des Elektrodenkopfes gegen das Messrohr über die Dicke des Klemmkeils und/oder über die Anordnung der Ausnehmung im Elektrodenschaft bestimmbar. Beispielsweise ist der Klemmkeil oder die Bohrung konisch ausgestaltet. Bevorzugt ist der Klemmkeil bzw. die Verklemmung federnd ausgestaltet.

Eine vorteilhafte Weiterbildung der erfindungsgemäßen Vorrichtung sieht vor, dass es sich bei dem Klemmkeil um ein Flachstück handelt, das in einem ersten Endbereich ein Griffteil aufweist. Darüber hinaus ist an dem Messrohr eine Anschlagkante vorgesehen, gegen die sich der zweite Endbereich des Flachstücks im montierten Zustand der Messelektrode abstützt. Ggf. wird das Flachstück in der Klemmposition.

Um die Herstellungskosten für das magnetisch-induktive Durchflussmess-gerät gering zu halten, ist das Messrohr aus Kunststoff gefertigt. Aufgrund seiner hervorragenden physikalischen und chemischen Beständigkeit kommt vorzugsweise aus Glasfaser verstärktes Polyamid oder Polypthalamid als Material für das Messrohr in Frage.

Ist das Messrohr hingegen aus einem leitfähigen Material gefertigt, so ist die Innenfläche des Messrohres und die Bohrung, in der die Messelektrode angeordnet ist, mit einem Liner aus einem elektrisch isolierenden Material ausgekleidet. Weiterhin wird vorgeschlagen, dass das Messrohr in den beiden Endbereichen einen im wesentlichen kreisförmigen Innenquerschnitt aufweist, wobei der mittlere Bereich, in dem das Magnetsystem angeordnet ist, näherungsweise rechteckförmig oder oval ausgestaltet ist. Durch die Verringerung des Durchmessers im mittleren Bereich, in dem das Magnet-system positioniert ist, lässt sich bei unveränderter Auslegung des Magnetsystems ein stärkeres Magnetfeld erzeugen. Hierdurch lässt sich die Messperformance des Durchflussmessgeräts verbessern. Bevorzugt kommen in Zusammenhang mit der vorliegenden Erfindung als Steckmodule ausgebildete Magnetsysteme zum Einsatz. Diese sind im Detail in einer zeitgleich mit der vorliegenden Patentanmeldung eingereichten Patentanmeldung der Anmelderin beschrieben.

Um abrupte Übergänge zwischen den beiden Endbereichen und dem mittleren Bereich zu vermeiden, sind die Übergangsbereich zwischen dem kreisförmigen Innenquerschnitt des Messrohrs und dem rechteckförmigen oder ovalen Innenquerschnitt des Messrohrs kontinuierlich oder stufenförmig ausgestaltet. Es hat sich herausgestellt, dass die stufenförmige Ausgestaltung besonders günstig ist, da sich hierdurch der Druckverlust minimieren lässt. Die Endbereiche des Messrohres, sprich der Ein- und Auslaufbereich des Messrohres, weisen an der Innenfläche eine spezielle Geometrie: Zumindest in Teilbereichen der Innenfläche des Messrohres sind Drallgeber angeordnet. Die Drallgeber führen das Medium weitgehend wirbelfrei auf einem gekrümmten und damit quasi künstlich verlängerten Weg durch das Messrohr. Die entsprechende Ausgestaltung ebenso wie die speziellen vorteilhaften Weiterbildungen eines Messrohres sind im Detail in einer ebenfalls zeitgleich mit der vorliegenden Patentanmeldung eingereichten Deutschen Patentanmeldung der Anmelderin beschrieben. Der Offenbarungsgehalt dieser zeitgleich eingereichten Patentanmeldung ist explizit dem Offenbarungsgehalt der vorliegenden Patentanmeldung zuzurechnen. Um die Stabilität des Messrohres zu erhöhen, sind an der Außenwand des Messrohres in Umfangsrichtung und/oder in Längsrichtung verlaufende Verstärkungsstege vorgesehen, die so angeordnet und ausgestaltet sind, dass das Messrohr im mittleren Bereich bis zu einem vorgegebenen Maximaldruck des strömenden Mediums druckfest ist.

Um eine ebene Auflage für die Innenfläche eines Elektrodenkopfes einer Messelektrode zu schaffen, ist im Falle eines ovalen oder runden Innenquerschnitts im Bereich der Fixierung der Messelektrode eine ebene Auflagefläche vorgesehen, die im wesentlichen senkrecht zur Längsachse des Messrohrs an der Innenwand des Messrohres befestigt ist. Gegen diese Auflagefläche wird die Innenfläche des Elektrodenkopfes, welcher bevorzugt pilzkopf- bzw. linsenförmig oder tellerförmig ausgestaltet ist, durch das Einbringen des Klemmkeils angepresst.

Um effektiv ein Eindringen von Medium in die Bohrung, in der die Messelektrode angeordnet ist, zu verhindern, ist eine Dichtung vorgesehen, die im montierten Zustand der Messelektrode zwischen der Innenfläche des Elektrodenkopfes und der Innenwand des Messrohrs bzw. des Liners bzw. der ebenen Auflagefläche positioniert ist.

Zur weiteren Erhöhung der Dichtigkeit im Bereich der Messelektrode ist im Bereich des Elektrodenschafts der Messelektrode zumindest ein kegelstumpfförmiger Abschnitt vorgesehen, der so dimensioniert und ausgestaltet ist, dass die Messelektrode in der Bohrung im montierten Zustand in axialer Richtung zusätzlich verankert ist. Es versteht sich von selbst, dass auch mehrere kegelstumpfförmige Abschnitte in Längsrichtung des Elektrodenschafts hintereinander angeordnet sein können.

Die Erfindung wird anhand der nachfolgenden Figuren näher erläutert. Es zeigt:
Fig. 1: eine schematische Darstellung einer Ausgestaltung der erfindungs-gemäßen Vorrichtung,
Fig. 2: eine perspektivische Ansicht der Messelektrode vor der Montage in der Bohrung des Messrohres,
Fig. 3: eine perspektivische Ansicht der im Messrohr montierten Messelektrode und
Fig. 4: eine perspektivische Ansicht einer bevorzugte Ausgestaltung des Messrohrs für ein magnetisch-induktives Durchflussmessgerät.

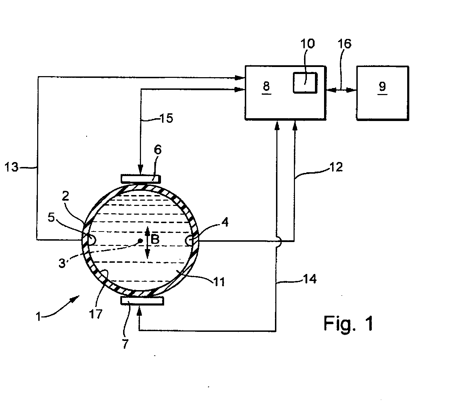

Fig. 1 zeigt eine schematische Darstellung einer Ausgestaltung der erfindungsgemäßen Vorrichtung 1. Das Messrohr 2 wird von dem Medium 11 in Richtung der Längsachse 3 des Messrohres 2 durchflossen. Das Medium 11 ist zumindest in geringem Umfang elektrisch leitfähig. Für den Fall, dass das Messrohr 2 aus einem elektrisch leitfähigen Material gefertigt ist, muss das Messrohr 2 an seiner Innenfläche mit einem elektrisch nicht-leitfähigen Liner 17 ausgekleidet sein; der Liner 17 besteht bevorzugt aus einem Material, das in hohem Maße chemisch und/oder mechanisch beständig ist.

Das senkrecht zur Strömungsrichtung des Mediums 11 ausgerichtete alternierende Magnetfeld B wird über ein Magnetsystem, z.B. über zwei diametral angeordnete Spulenanordnungen 6, 7 bzw. über zwei Elektromagnete, erzeugt. Unter dem Einfluss der Magnetfeldes B wandern in dem Medium 11 befindliche Ladungsträger je nach Polarität zu den beiden entgegengesetzt gepolten Messelektroden 4, 5 ab. Die sich an den Messelektroden 4, 5 aufbauende Messspannung ist proportional zu der über den Querschnitt des Messrohres 2 gemittelten Strömungsgeschwindigkeit des Mediums 11, d. h. sie ist ein Maß für den Volumenstrom des Mediums 11 in dem Messrohr 2. Das Messrohr 2 ist übrigens über in der Fig. 1 nicht gesondert dargestellte Verbindungselemente, z. B. Flansche, mit einer Rohrleitung verbunden, durch die das Medium 11 hindurchströmt.

Bei den beiden Messelektroden 4, 5 handelt es sich bevorzugt um Messelektroden, deren mit dem Medium 11 in Kontakt kommender Endbereich aufgeweitet ist.

Über elektrische Verbindungsleitungen 12, 13 sind die Messelektroden 4, 5 mit der Regel-/Auswerteeinheit 8 verbunden. Die Verbindung zwischen den Spulenanordnungen 6, 7 und der Regel-/Auswerteeinheit 8 erfolgt über die elektrischen Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

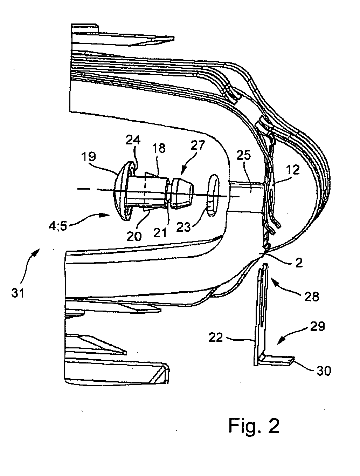

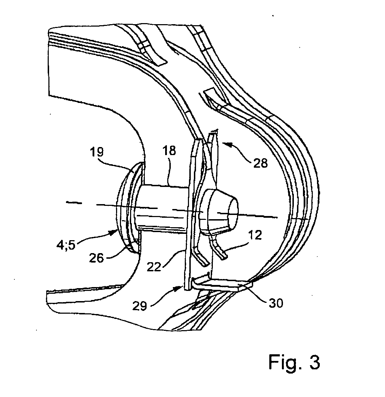

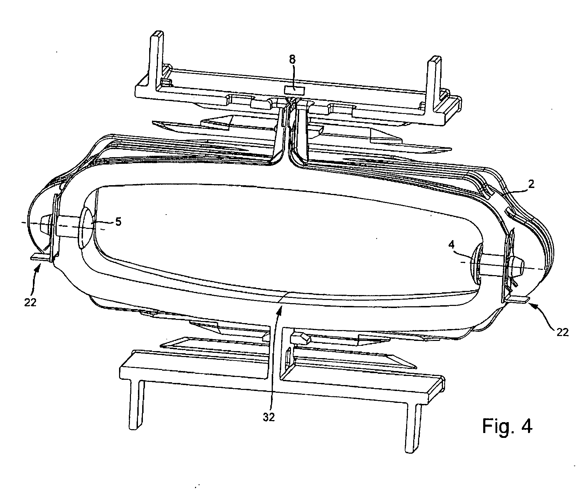

Fig. 2 zeigt eine perspektivische Ansicht der Messetektrode 4; 5 vor der Montage im Messrohr 2. In Fig. 3 ist eine perspektivische Ansicht der in einer Bohrung 25 im Messrohr 2 montierten Messelektrode 4; 5 zu sehen. Fig. 4 zeigt eine geschnittene perspektivische Ansicht einer bevorzugten Ausgestaltung des Messrohrs 2 für ein magnetisch-induktives Durchflussmessgerät 1.

In gegenüberliegenden Seitenbereichen des mittleren Bereiches 32 des Messrohrs 2 finden sich zwei Bohrung 25 zur Aufnahme der Messelektroden 4; 5. Die Messelektroden 4; 5 sind in den Figuren durchgehend als Pilzkopfelektroden ausgebildet, bestehen also aus einem Elektrodenschaft 18 mit einem aufgeweiteten Endbereich 19, der die Form eines Pilzkopfes hat. Es versteht sich von selbst, dass auch anderweitig geformte Elektrodenköpfe 19 in Verbindung mit der vorliegenden Erfindung zum Einsatz kommen können.

Im entgegengesetzten zweiten Endbereich 27 hat der Elektrodenschaft 18 eine Ausnehmung 21. Die Ausnehmung 21 besteht im gezeigten Fall aus einer umlaufenden Vertiefung in dem Elektrodenschaft 18. Im montierten Zustand der Messelektrode 4; 5 ist die Ausnehmung 21 in klemmendem Eingriff mit dem Klemmkeil 22. Der Klemmkeil 22 und/oder die Ausnehmung 21 sind so ausgestaltet, dass die Innenfläche 24 der Messelektrode 4; 5 mit einem vorgegebenen und gewünschten Anpressdruck gegen die entsprechende Innenfläche des Messrohres 2 angepresst wird. Um je nach Ausgestaltung des Messrohres 2 eine ebene Anlage der Innenfläche 24 des Elektrodenkopfes 19 an dem Messrohr 2 zu erreichen, ist ggf. eine ebene Auflagefläche 26 an der entsprechenden Stelle des Messrohrs 2 anzubringen bzw. vorgesehen.

Durch die Verkeilung der Messelektrode 4; 5 in der Bohrung 25 wird ein Presssitz der Messelektrode 4; 5 in der Bohrung 25 des Messrohres 2 erreicht. Um zu verhindern, dass Medium 11 in den Spalt zwischen Messelektrode 4; 5 und Bohrung 25 eindringt, ist eine Dichtung 23 vorgesehen. Bevorzugt handelt es sich bei der Dichtung 23 um einen Dichtring. Die Abdichtung kann bei Bedarf eventuell noch dadurch verbessert werden, dass zumindest ein kegelstumpfförmiger Abschnitt 20 an dem Elektrodenschaft 18 vorgesehen ist, der so ausgestaltet ist, dass sich der Elektrodenschaft 18 in der Bohrung 25 verankert. Bevorzugt ist der Klemmkeil 22 federnd ausgestaltet, so dass die Messelektrode 4; 5 auch unter sich ändernden Bedingungen ihren Presssitz am Messrohr 2 beibehält. Der Anspressdruck selbst lässt sich durch entsprechende Modifikation der Ausnehmung 21 und/oder des Klemmkeils 22 erreicht. So kann der Klemmkeil 22 oder die Ausnehmung 21 in ihren Abmessungen beispielsweise konisch ausgestaltet sein.

Der Klemmkeil 22 weist in seinem ersten Endbereich 29 ein Griffteil 30 auf; der zweite flach ausgestaltete Endbereich 28 weist zwei gabelförmige Zinken auf. Durch Eingriff der Zinken in die Ausnehmung 21 erfolgt die Verklemmung der Messelektrode 4; 5 gegen das Messrohr 2. Der zweite Endbereich 28 hat als Stopp eine Anschlagkante 31, die an dem Messrohr 2 befestigt ist.

Gemäß der erfindungsgemäßen Vorrichtung 1 erfolgt die elektrische Verbindung der Messelektroden 4; 5 mit der Regel-/Auswerteeinheit 8 quasi 'automatisch': Die Verbindungsleitung 12 wird beim Positonieren des Klemmkeils 22 in der Ausnehmung 21 des Elektrodenschafts 18 gleichfalls durch Einklemmen mit der Messelektrode 4; 5 kontaktiert.

### Bezugszeichenliste

- 1.: Magnetisch-induktives Durchflussmessgerät
- 2.: Messrohr
- 3.: Messrohrachse
- 4.: Messelektrode
- 5.: Messelektrode
- 6.: Spulenanordnung / Magnetsystem
- 7.: Spulenanordnung / Magnetsystem
- 8.: Regel-/Auswerteeinheit
- 9.: Eingabe-/Ausgabeeinheit
- 10.: Speichereinheit
- 11.: Medium
- 12.: Verbindungsleitung
- 13.: Verbindungsleitung
- 14.: Verbindungsleitung
- 15.: Verbindungsleitung
- 16.: Verbindungsleitung
- 17.: Liner
- 18.: Elektrodenschaft
- 19.: Elektrodenkopf / aufgeweiteter erster Endbereich
- 20.: kegelstumpfförmiger Abschnitt
- 21.: Ausnehmung
- 22.: Klemmkeil
- 23.: Dichtscheibe bzw. lsolationsscheibe
- 24.: Innenfläche des Elektrodenkopfes
- 25.: Bohrung
- 26.: Auflagefläche
- 27.: Zweiter Endbereich des Elektrodenschafts
- 28.: zweiter Endbereich des Klemmkeils
- 29.: erster Endbereich des Klemmkeils
- 30.: Griffteil
- 31.: Anschlagkante
- 32.: mittlerer Bereich des Messrohres

## Patentansprüche

1. Vorrichtung zum Messen des Volumen- oder Massestroms eines Mediums (11) in einer Rohrleitung, mit einem Messrohr (2), das von dem Medium (11) in Richtung der Längsachse (3) des Messrohres (2) durchströmt wird, mit einem Magnetsystem (6, 7), das derart ausgestaltet ist, dass es ein das Messrohr (2) durchsetzendes, im wesentlichen quer zur Längsachse (3) des Messrohrs (2) verlaufendes Magnetfeld (B) erzeugt, mit zwei mit dem Medium (11) koppelnden Messelektroden (4, 5), die in einem im wesentlichen senkrecht zum Magnetfeld (B) liegenden Bereich in einer Bohrung (25) in der Wandung des Messrohres (2) angeordnet sind, wobei die Messelektroden (6, 7) einen länglichen Elektrodenschaft (18) mit einem ersten mit dem Medium koppelnden aufgeweiteten Endbereich (19) aufweist, der so dimensioniert ist, dass sein Durchmesser größer ist als der Durchmesser der Bohrung (25) in der Wandung des Messrohrs (2), in der die Messelektrode (6; 7) plaziert ist, und mit einer Regel-/Auswerteeinheit (8), die anhand der in die Messelektroden (4, 5) induzierten Messspannung Information über den Volumen- oder Massestrom des Mediums (11) in dem Messrohr (2) liefert, **dadurch gekennzeichnet,**
**dass** im dem ersten Endbereich (19) entgegengesetzten zweiten Endbereich (27) des Elektrodenschafts (18) der Messelektrode (4, 5) eine Ausnehmung (21) vorgesehen ist, und dass ein Klemmkeil (22) vorgesehen ist, der im Eingriff mit der Ausnehmung (21) steht und die Messelektrode (4, 5) in der Bohrung (25) des Messrohrs (2) gegen das Messrohr (2) verkeilt, und dass eine Verbindungsleitung (12, 13) zur elektrischen Verbindung der Messelektrode (4, 5) mit der Regel-/Auswerteeinheit (8) vorgesehen ist, welche beim Positionieren des Klemmkeils (22) in der Ausnehmung (21) durch Einklemmen mit der Messelektrode (4, 5) kontaktiert.

2. Vorrichtung nach Anspruch 1,
**dadurch gekennzeichnet,**
**dass** der Anpressdruck des Elektrodenkopfes (19) gegen das Messrohr (2) über die Abmessung des Klemmkeils (22) und/oder über die Anordnung oder Abmessung der Ausnehmung (21) im Elektrodenschaft (19) bestimmbar ist.

3. Vorrichtung nach Anspruch 1 oder 2,
**dadurch gekennzeichnet,**
**dass** es sich bei dem Klemmkeil (22) um ein Flachstück handelt, das in einem ersten Endbereich (29) ein Griffteil (30) aufweist.

4. Vorrichtung nach Anspruch 1, 2 oder 3,
**dadurch gekennzeichnet,**
**dass** an dem Messrohr (2) eine Anschlagkante (31) vorgesehen ist, gegen die sich der zweite Endbereich (28) des Flachstücks (22) im montierten Zustand der Messelektrode (4, 5) abstützt.

5. Vorrichtung nach Anspruch 1 oder 4,
**dadurch gekennzeichnet,**
**dass** das Messrohr (2) aus Kunststoff, vorzugsweise aus Glasfaser verstärktem Polyamid oder Polypthalamid besteht.

6. Vorrichtung nach Anspruch 1 oder 4,
**dadurch gekennzeichnet,**
**dass** für den Fall, dass das Messrohr (2) aus einem leitfähigen Material gefertigt ist, die Innenfläche des Messrohrs (2) und die Bohrungen (25), in der die Messelektroden (4, 5) angeordnet ist, mit einem Liner (17) aus einem elektrisch isolierenden Material ausgekleidet ist.

7. Vorrichtung nach Anspruch 1, 5 oder 6,
**dadurch gekennzeichnet,**
**dass** das Messrohr (2) in den beiden Endbereichen einen im wesentlichen kreisförmigen Innenquerschnitt aufweist, wobei der mittlere Bereich (31), in dem das Magnetsystem (6, 7) angeordnet ist, näherungsweise rechteckförmig oder oval ausgestaltet ist.

8. Vorrichtung nach Anspruch 7,
**dadurch gekennzeichnet**,
wobei ein Übergangsbereich zwischen dem kreisförmigen Innenquerschnitt des Messrohrs (2) und dem rechteckförmigen oder ovalen Innenquerschnitt des Messrohrs (2) kontinuierlich oder stufenförmig ausgestaltet ist.

9. Vorrichtung nach Anspruch 7 oder 8,
**dadurch gekennzeichnet,**
**dass** an der Außenwand des Messrohres (2) in Umfangsrichtung und/oder in Längsrichtung verlaufende Verstärkungsstege vorgesehen sind, die so angeordnet und ausgestaltet sind, dass das Messrohr (2) im mittleren Bereich (31) bis zu einem vorgegebenen Maximaldruck des strömenden Mediums (11) druckfest ist.

10. Vorrichtung nach Anspruch 9,
**dadurch gekennzeichnet,**
**dass** im Falle eines ovalen, oder runden Innenquerschnitts im Bereich der Fixierung der Messelektrode (4, 5) eine ebene Auflagefläche (26) vorgesehen ist, die im wesentlichen senkrecht zur Längsachse (3) des Messrohrs (2) an der Innenwand des Messrohres (2) befestigt ist.

11. Vorrichtung nach Anspruch 1,
**dadurch gekennzeichnet,**
**dass** der aufgeweitete Endbereich (19) der Messelektrode (6, 7) pilzkopf-förmig bzw. linsenförmig oder tellerförmig ausgestaltet ist.

12. Vorrichtung nach Anspruch 1, 5, 6 oder 10,
**dadurch gekennzeichnet,**
**dass** eine Dichtung (23) vorgesehen ist, die im montierten Zustand der Messelektrode (4, 5) zwischen der Innenfläche (24) des Elektrodenkopfes (19) und der Innenwand des Messrohrs (2) bzw. des Liners (17) bzw. der ebenen Auflagefläche (26) vorgesehen ist.

13. Vorrichtung nach Anspruch 1, 11 oder 12,
**dadurch gekennzeichnet,**
**dass** im Bereich des Elektrodenschafts (18) der Messelektrode (4, 5) zumindest ein kegelstumpfförmiger Abschnitt (20) vorgesehen ist, der so dimensioniert und ausgestaltet ist, dass die Messelektrode (4, 5) in der Bohrung (25) im montierten Zustand in axialer Richtung verankert ist.

14. Vorrichtung nach Anspruch 1 oder 13,
**dadurch gekennzeichnet,**
**dass** mehrere kegelstumpfförmige Abschnitte (20) vorgesehen sind, die in Längsrichtung des Elektrodenschafts (18) hintereinander angeordnet sind.

## Claims

1. Unit for measuring the volume flow or mass flow of a medium (11) in a pipe with a measuring tube (2) through which the medium (11) flows in the direction of the longitudinal axis (3) of the measuring tube (2), with a magnet system (6, 7) which is designed in such a way that it generates a magnetic field (B), which acts in the measuring tube (2) and runs primarily perpendicular to the longitudinal axis (3) of the measuring tube (2) with two measuring electrodes (4, 5) coupled with the medium (11), said electrodes being arranged in an area, primarily perpendicular to the magnetic field (B), in a bore (25) in the wall of the measuring tube (2), where the measuring electrodes (6, 7) have an oblong electrode shaft (18) with a first end section (19) that is coupled with the medium and is shaped such that its diameter is larger than the diameter of the bore (25) in the wall of the measuring tube (2) in which the measuring electrode (6; 7) is positioned, and with a control/evaluation unit (8) which uses the voltage induced in the measuring electrodes (4, 5) to provide information on the volume flow or mass flow of the medium (11) in the measuring tube (2),
**characterized in that**
a recess (21) is provided in the second end section (27) - located opposite the first end section (19) - of the electrode shaft (18) of the measuring electrode (4, 5), and **in that** a wedge (22) is provided which engages in the recess (21) and wedges the measuring electrode (4, 5) against the measuring tube (2) in the bore (25) of the measuring tube (2), and **in that** a connection cable (12, 13) is provided to electrically connect the measuring electrode (4, 5) with the control/evaluation unit (8) which makes contact with the measuring electrode (4, 5) on account of the clamping effect when the wedge (22) is positioned in the recess (21).

2. Unit as per Claim 1,
**characterized in that** the contact pressure of the electrode head (19) against the measuring tube (2) can be determined via the size of the wedge (22) and/or via the arrangement or size of the recess (21) in the electrode shaft (19).

3. Unit as per Claim 1 or 2,
**characterized in that** the wedge (22) is a flat element that has a handle part (30) in a first end section (29).

4. Unit as per Claim 1, 2 or 3
**characterized in that** a stop angle (31) is provided on the measuring tube (2) on which the second end section (28) of the flat element (22) rests when the measuring electrode (4, 5) is mounted.

5. Unit as per Claim 1 or 4,
**characterized in that** the measuring tube (2) is made of plastic, preferably glass-fiber reinforced polyamide or polyphthalamide.

6. Unit as per Claim 1 or 4, **characterized in that**
if the measuring tube (2) is made from a conductive material, the inner surface of the measuring tube (2) and the bores (25), in which the measuring electrodes (4, 5) are arranged, is lined with a liner (17) made from electrically isolating material.

7. Unit as per Claim 1, 5 or 6,
**characterized in that** the measuring tube (2) has a primarily circular internal cross-section in the two end areas, where the central area (31) in which the magnet system (6, 7) is arranged, is approximately square or oval in shape.

8. Unit as per Claim 7
**characterized in that** a transition area between the circular inner cross-section of the measuring tube (2) and the square or oval inner cross-section of the measuring tube (2) is continuous or stepped.

9. Unit as per Claim 7 or 8,
**characterized in that** reinforcements are provided along the circumference or in a longitudinal direction on the outer wall of the measuring tube (2), which are arranged and designed in such a way that the measuring tube (2) is pressure-resistant in the central section (31) up to a predefined maximum pressure of the flowing medium (11).

10. Unit as per Claim 9,
**characterized in that** if the area where the measuring electrode (4, 5) is secured has an oval or round internal cross-section, a flat support surface (26) is provided which is secured on the interior wall of the measuring tube (2) in a way that is primarily perpendicular to the longitudinal axis (3) of the measuring tube (2).

11. Unit as per Claim 1,
**characterized in that** the extended end section (19) of the measuring electrode (6, 7) is shaped like a mushroom, lens or plate.

12. Unit as per Claim 1, 5, 6 or 10
**characterized in that** a seal (23) is provided which is located between the inner surface (24) of the electrode head (19) and the inner wall of the measuring tube (2) or the liner (17) or the flat support surface (26) when the measuring electrode (4, 5) is mounted.

13. Unit as per Claim 1, 11 or 12
**characterized in that** at least one frustum-shaped section (20) is provided in the area of the electrode shaft (18) of the measuring electrode (4, 5) which is shaped and designed in such a way that the measuring electrode (4, 5) is fixed in the axial direction in the bore (25) when mounted.

14. Unit as per Claim 1 or 13,
**characterized in that** several frustum-shaped sections (20) are provided which are arranged one after another in the longitudinal direction of the electrode shaft (18).

## Revendications

1. Dispositif destiné à la mesure du débit volumétrique ou massique d'un produit (11) dans une tuyauterie, avec un tube de mesure (2), lequel est parcouru par le produit (11) en direction de l'axe longitudinal (3) du tube de mesure (2), avec un système magnétique (6, 7), lequel est conçu de telle manière à générer un champ magnétique (B) traversant le tube de mesure (2), champ pour l'essentiel perpendiculaire à l'axe longitudinal (3) du tube de mesure (2), avec deux électrodes de mesure (4, 5) couplées avec le produit (11), électrodes qui sont disposées dans la paroi du tube de mesure (2), dans un alésage (25) se trouvant dans une zone pour l'essentiel perpendiculaire au champ magnétique (B), les électrodes de mesure (6, 7) présentant une tige d'électrode (18) allongée avec une première zone d'extrémité (19) évasée, couplée avec le produit, laquelle zone est dimensionnée de telle manière que son diamètre soit supérieur au diamètre de l'alésage (25) situé dans la paroi du tube de mesure (2), dans lequel est placée l'électrode de mesure (6, 7), et avec une unité de régulation / d'exploitation (8), qui fournit au moyen de la tension de mesure induite dans les électrodes de mesure (4, 5) l'information sur le débit volumétrique ou massique du produit (11) dans le tube de mesure (2), **caractérisé en ce**
**qu'**est prévu un évidement (21) dans la deuxième zone d'extrémité (27) de la tige d'électrode (18) de l'électrode de mesure (4, 5), située à l'opposé de la première zone d'extrémité (19), et qu'est prévu un coin de serrage (22), qui est en prise avec l'évidement (21) et coince l'électrode de mesure (4, 5) dans l'alésage (25) du tube de mesure (2) contre le tube de mesure (2), et qu'est prévu un câble de raccordement (12, 13) destiné à établir la liaison électrique entre l'électrode de mesure (4, 5) et l'unité de régulation / d'exploitation (8), laquelle liaison est établie lors du positionnement du coin de serrage (22) dans l'évidement (21) par le serrage de l'électrode de mesure (4, 5).

2. Dispositif selon la revendication 1,
**caractérisé en ce**
**que** la pression d'appui de la tête d'électrode (19) contre le tube de mesure (2) peut être définie par la taille du coin de serrage (22) et/ou par la disposition ou la taille de l'évidement (21) dans la tige d'électrode (18).

3. Dispositif selon la revendication 1 ou 2,
**caractérisé en ce**
**que**, concernant le coin de serrage (22), il s'agit d'une pièce plate, qui comporte dans une première zone d'extrémité (29) une pièce en forme de poignée.

4. Dispositif selon la revendication 1, 2 ou 3,
**caractérisé en ce**
**qu'**est prévue sur le tube de mesure (2) une arête de butée (31), contre laquelle la deuxième zone d'extrémité (28) de la pièce plate (22) s'appuie, à l'état monté de l'électrode de mesure (4, 5).

5. Dispositif selon la revendication 1 ou 4,
**caractérisé en ce**
**que** le tube de mesure (2) est en matière plastique, de préférence en polyamide ou en polyphtalamide renforcé de fibre de verre.

6. Dispositif selon la revendication 1 ou 4,
**caractérisé en ce**
**que**, pour le cas où le tube de mesure (2) est composé d'un matériau conducteur, la surface intérieure du tube de mesure (2) et les alésages (25) situés dans les électrodes de mesure (4, 5) sont disposés de telle manière à être revêtues par une garniture (17) constituée d'un matériau électroconducteur.

7. Dispositif selon la revendication 1, 5 ou 6,
**caractérisé en ce**
**que** le tube de mesure (2) présente dans les deux zones d'extrémité une section intérieure pour l'essentiel circulaire, la zone médiane (31), dans laquelle est disposé le système magnétique (6, 7), étant conçue avec une forme à peu près rectangulaire ou ovale.

8. Dispositif selon la revendication 7,
**caractérisé en ce**
par le fait qu'est conçue une zone de transition continue ou discontinue entre la section intérieure circulaire du tube de mesure (2) et la section intérieure rectangulaire ou ovale du tube de mesure (2).

9. Dispositif selon la revendication 7 ou 8,
**caractérisé en ce**
**que** sont prévus, sur la paroi extérieure du tube de mesure (2), des nervures de renfort orientées dans la direction circonférentielle et/ou longitudinale, nervures qui sont disposées et conçues de telle manière que le tube de mesure (2) résiste, dans la zone médiane (31), jusqu'à une pression maximale prédéfinie du produit (11) y circulant.

10. Dispositif selon la revendication 9,
**caractérisé en ce**
**que**, dans le cas d'une section intérieure ovale ou circulaire, il est prévu, dans la zone de fixation de l'électrode de mesure (4, 5), une surface d'appui plane (26), laquelle est fixée à la paroi intérieure du tube de mesure (2), pour l'essentiel perpendiculairement à l'axe longitudinal (3) du tube de mesure (2).

11. Dispositif selon la revendication 1,
**caractérisé en ce**
**que** la zone d'extrémité (19) évasée de l'électrode de mesure (6, 7) est conçue sous la forme d'une tête de champignon, ou sous forme de lentille ou sous forme de disque.

12. Dispositif selon la revendication 1, 5, 6 ou 10,
**caractérisé en ce**
**qu'**est prévu un joint (23), lequel est prévu, à l'état monté de l'électrode de mesure (4, 5), entre la surface intérieure (24) de la tête d'électrode (19) et la paroi intérieure du tube de mesure (2) ou la garniture (17) ou la surface d'appui (26) plane.

13. Dispositif selon la revendication 1, 11 ou 12,
**caractérisé en ce**
**que**, dans la zone de la tige d'électrode (18) de l'électrode de mesure (4, 5), est prévue au moins une partie tronconique (20), laquelle est dimensionnée et conçue de telle manière que l'électrode de mesure (4, 5) soit ancrée en direction axiale dans l'alésage (25), à l'état monté.

14. Dispositif selon la revendication 1 ou 13,
**caractérisé en ce**
**que** sont prévues plusieurs parties tronconiques (20), lesquelles sont disposées les unes derrière les autres, dans la direction longitudinale de la tige d'électrode (18).
